(19)

Europäisches
Patentamt

European
Patent Office

Office européen
des brevets

(11) **EP 4 765 041 A1**

(12) **EUROPEAN PATENT APPLICATION**
published in accordance with Art. 153(4) EPC

(43) Date of publication:
**24.06.2026  Bulletin 2026/26**

(21) Application number: **24861959.5**

(22) Date of filing: **03.09.2024**

(51) International Patent Classification (IPC):
*G06V 10/80* (2022.01)     *G06V 10/58* (2022.01)
*G06V 10/77* (2022.01)     *G06T 7/246* (2017.01)
*G06V 10/82* (2022.01)     *G06N 3/0464* (2023.01)

(86) International application number:
**PCT/CN2024/116550**

(87) International publication number:
**WO 2025/051116 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **05.09.2023  CN 202311138944**

(71) Applicant: **Huawei Technologies Co., Ltd.
Shenzhen, Guangdong 518129 (CN)**

(72) Inventors:
• **CHEN, Chang
  Shenzhen, Guangdong 518129 (CN)**

• **HU, Xue
  Shenzhen, Guangdong 518129 (CN)**
• **SONG, Fenglong
  Shenzhen, Guangdong 518129 (CN)**
• **WANG, Lizhi
  Beijing 100081 (CN)**
• **WANG, Hongyuan
  Beijing 100081 (CN)**

(74) Representative: **Thun, Clemens
  Mitscherlich PartmbB
  Karlstraße 7
  80333 München (DE)**

(54) **DATA PROCESSING METHOD AND APPARATUS**

(57)    A data processing method is provided. The method is applied to image processing and includes: obtaining first data collected by an image sensor; and obtaining spectral information based on the first data by using a neural network model, where the neural network model includes an attention module, and the attention module is configured to determine an attention matrix based on input data, and perform an attention operation based on the attention matrix, where the attention matrix is obtained by performing a first fusion operation on correlation information between different channels of the input data and correlation information of the channels. In this application, a degree of correlation between the different channels and a degree of correlation of the channels may be fused, so that the attention matrix can model both correlation and particularity between the different channels, thereby improving accuracy of spectral signal reconstruction.

```
                    ┌─────────────────────────────────────────────┐   601
                    │  Obtain first data collected by an image sensor │
                    └─────────────────────────────────────────────┘
                                       │
                                       ▼
        ┌─────────────────────────────────────────────────────────┐
        │  Obtain spectral information based on the first data by   │
        │  using a neural network model, where the neural network   │
        │  model includes an attention module, and the attention    │
        │  module is configured to determine an attention matrix    │   602
        │  based on input data, and perform an attention operation   │
        │  based on the attention matrix, where the attention matrix │
        │  is obtained by performing a first fusion operation on     │
        │  correlation information between different channels of the │
        │  input data and correlation information of the channels    │
        └─────────────────────────────────────────────────────────┘
```

FIG. 6

EP 4 765 041 A1

**Description**

This application claims priority to Chinese Patent Application No. 202311138944.0, filed with the China National Intellectual Property Administration on September 5, 2023, and entitled "DATA PROCESSING METHOD AND APPARATUS THEREFOR", which is incorporated herein by reference in its entirety.

**TECHNICAL FIELD**

This application relates to the field of artificial intelligence, and in particular, to a data processing method and an apparatus therefor.

**BACKGROUND**

Artificial intelligence (Artificial Intelligence, AI) is a theory, a method, a technology, and an application system that simulate and extend human intelligence by using a digital computer or a machine controlled by a digital computer, to perceive an environment, obtain knowledge, and use the knowledge to obtain an optimal result. In other words, the artificial intelligence technology is a branch of computer science and is intended to understand essence of intelligence and produce a new intelligent machine that can react in a manner similar to human intelligence. The artificial intelligence is to study design principles and implementation methods of various intelligent machines, so that the machines have perception, inference, and decision-making functions.

Currently, widely used cameras and smartphones are equipped with image sensors. A common image sensor uses a color filter array (Color Filter Array), also known as a Bayer filter (Bayer Filter), arranged above a photosensitive area. A common arrangement mode of the CFA is that a cyclic unit is formed by four pixels in a $2 \times 2$ pattern. This unit contains three primary colors: red (R), green (G), and blue (B). Therefore, a color image sensor is also referred to as an RGB image sensor.

The RGB sensor is intended to directly simulate a response of three types of cone cells (L/M/S) in a human eye to a spectrum. The response is sampling of complete spectral information, and the spectral information cannot be completely captured, which is likely to cause a metamerism (Metamerism) problem. As a result, color reproduction performance of an existing RGB camera is limited in some difficult scenes, for example, a scene including a large pure-color area. Compared with an RGB color sensor, a multispectral sensor is intended to capture a raw spectral signal more completely. Above a gray photosensitive area of the multispectral sensor, a cyclic unit is formed by 16 pixels in a $4 \times 4$ pattern, and each pixel corresponds to a color filter (or color filter coating). With this design, a spectral resolution of the sensor is increased from 3 dimensions to 16 dimensions, and a spectral signal can be captured more completely.

However, due to constraints of a filter material, a manufacturing process, and costs, a raw signal (RAW signal) collected by the image sensor is subject to aliasing between spectral bands. Therefore, the raw signal needs to be parsed and reconstructed to obtain spectral information. In an existing implementation, reconstruction accuracy of the spectral information is relatively poor.

**SUMMARY**

This application provides a data processing method, to improve reconstruction accuracy of a spectral signal.

According to a first aspect, this application provides an image processing method. The method includes: obtaining first data collected by an image sensor; and obtaining spectral information based on the first data by using a neural network model, where the neural network model includes an attention module, and the attention module is configured to determine an attention matrix based on input data, and perform an attention operation based on the attention matrix, where the attention matrix is obtained by performing a first fusion operation on correlation information between different channels of the input data and correlation information of the channels.

In some implementations, when values of elements in the attention matrix are close to each other (for example, all are small or all are large), there is no clear degree of distinction between the different channels. Consequently, an effect of the attention operation is relatively poor. Especially in a scenario of spectral information reconstruction, each channel may be considered to have a specific physical meaning. Therefore, the attention matrix needs to represent a degree of distinction between the different channels as much as possible, to improve reconstruction accuracy of the spectral information.

In an embodiment of this application, when obtaining the attention matrix through calculation, the attention module may fuse a degree of correlation between the different channels and a degree of correlation of the channels, so that the attention matrix can model both correlation between the different channels and particularity of the channels, thereby improving accuracy of spectral signal reconstruction.

The correlation information of the channels may be understood as information that is in each channel and that is different from information in other channels, that is, information having particularity. The information may not be obtained through interaction with the other channels, but is obtained by performing an interaction operation (for example, dimension reduction or convolution) on data in the channel. The information may reflect the degree of distinction between the channels.

The neural network model may include a feature extraction network (for example, an encoder and a decoder) and a downstream task network (for example, a mapping (mapping) network). The attention module may be a module that is in the feature extraction network and that is configured to perform an attention operation (for example, the module is an attention head). The feature extraction network may further include other modules, for example, an addition and normalization layer and a feed-forward layer. A feature representation obtained by using the feature extraction network based on the input data (for example, the data collected by the image sensor) may be input to the downstream task network to obtain an output (for example, the spectral information).

In a possible implementation, the attention module is specifically configured to perform linear transformation on the input data to obtain a matrix K, a matrix Q, and a matrix V, and determine the attention matrix based on the matrix K, the matrix Q, and the matrix V, where the correlation information of the channels is determined based on the matrix V, and the correlation information between the different channels is determined based on the matrix K and the matrix Q.

In a possible implementation, the correlation information of the channels is determined in the following manner: performing a second fusion operation on data in each channel of the matrix V, to obtain dimension-reduced data; and performing convolution on the dimension-reduced data, and converting a convolution result into a diagonal matrix, where the diagonal matrix is used as the correlation information of the channels.

In a possible implementation, the first fusion operation is matrix addition.

In a possible implementation, the first fusion operation is weighted summation, and a weight corresponding to the correlation information between the different channels and a weight corresponding to the correlation information of the channels are learnable parameters.

In a possible implementation, the second fusion operation is a global average pooling or convolution operation.

In a possible implementation, the attention module belongs to at least one attention head (head) in the neural network model.

In a possible implementation, performing the linear transformation on the input data to obtain the matrix K, the matrix Q, and the matrix V includes: performing, based on a first convolution kernel, a convolution operation on data that is in a first channel and that is included in the input data, to obtain a first convolution result; and performing, based on a second convolution kernel, a convolution operation on the data that is in the first channel and that is included in the input data, to obtain a second convolution result, where the first convolution result and the second convolution result are used for concatenation to obtain one of the matrix K, the matrix Q, and the matrix V.

In a possible implementation, a convolution kernel may be used for a channel of the input data, to obtain a value of the matrix K, the matrix Q, or the matrix V in the corresponding channel. In other words, during calculation of the matrix K, the matrix Q, or the matrix V, at least one element in the matrix is obtained through calculation by using one convolution kernel in one channel of the input data, instead of being obtained through interaction between channels. This projection mode is independently applied to each channel of spectral features, and maintains particularity of a spectral information token.

In a possible implementation, the first convolution kernel is the same as the second convolution kernel.

In a possible implementation, the spectral information includes a plurality of response values of a narrowband spectral response space.

According to a second aspect, this application provides a data processing apparatus. The apparatus includes:

an obtaining module, configured to obtain first data collected by an image sensor; and

a processing module, configured to obtain spectral information based on the first data by using a neural network model, where the neural network model includes an attention module, and the attention module is configured to determine an attention matrix based on input data, and perform an attention operation based on the attention matrix, where the attention matrix is obtained by performing a first fusion operation on correlation information between different channels of the input data and correlation information of the channels.

In a possible implementation, the attention module is specifically configured to perform linear transformation on the input data to obtain a matrix K, a matrix Q, and a matrix V, and determine the attention matrix based on the matrix K, the matrix Q, and the matrix V, where the correlation information of the channels is determined based on the matrix V, and the correlation information between the different channels is determined based on the matrix K and the matrix Q.

In a possible implementation, the correlation information of the channels is determined in the following manner:

performing a second fusion operation on data in each channel of the matrix V, to obtain dimension-reduced data; and performing convolution on the dimension-reduced data, and converting a convolution result into a diagonal matrix, where the diagonal matrix is used as the correlation information of the channels.

In a possible implementation, the first fusion operation is matrix addition.

In a possible implementation, the first fusion operation is weighted summation, and a weight corresponding to the correlation information between the different channels and a weight corresponding to the correlation information of the channels are learnable parameters.

In a possible implementation, the second fusion operation is a global average pooling or convolution operation.

In a possible implementation, the attention module belongs to at least one attention head (head) in the neural network model.

In a possible implementation, the processing module is specifically configured to:

perform, based on a first convolution kernel, a convolution operation on data that is in a first channel and that is included in the input data, to obtain a first convolution result; and

perform, based on a second convolution kernel, a convolution operation on the data that is in the first channel and that is included in the input data, to obtain a second convolution result, where

the first convolution result and the second convolution result are used for concatenation to obtain one of the matrix K, the matrix Q, and the matrix V.

In a possible implementation, the first convolution kernel is the same as the second convolution kernel.

In a possible implementation, the spectral information includes a plurality of response values of a narrowband spectral response space.

According to a third aspect, an embodiment of this application provides a data processing apparatus. The apparatus may include a memory, a processor, and a bus system. The memory is configured to store a program. The processor is configured to execute the program in the memory, to perform the method according to any one of the first aspect and the optional implementations of the first aspect.

According to a fourth aspect, an embodiment of this application provides a computer-readable storage medium. The computer-readable storage medium stores a computer program. When the computer program is run on a computer, the computer is enabled to perform the method according to any one of the first aspect and the optional implementations of the first aspect.

According to a fifth aspect, an embodiment of this application provides a computer program. When the computer program is run on a computer, the computer is enabled to perform the method according to any one of the first aspect and the optional implementations of the first aspect.

According to a sixth aspect, this application provides a chip system. The chip system includes a processor configured to support a data processing apparatus in implementing functions in the foregoing aspects, for example, sending or processing data or information in the foregoing method. In a possible design, the chip system further includes a memory, and the memory is configured to store program instructions and data that are necessary for the data processing apparatus. The chip system may include a chip, or may include a chip and another discrete component.

**BRIEF DESCRIPTION OF DRAWINGS**

FIG. 1 is a diagram of a structure of an artificial intelligence main framework;

FIG. 2 is a diagram of an application system framework according to this application;

FIG. 3 to FIG. 5 are diagrams of structures of a network;

FIG. 6 is a schematic flowchart of a data processing method according to an embodiment of this application;

FIG. 7 is a diagram of data collected by an image sensor;

FIG. 8 is a diagram of data collected by an image sensor;

FIG. 9 and FIG. 10 are diagrams of structures of a network;

FIG. 11A to FIG. 11C are schematic flowcharts of a data processing method according to an embodiment of this application;

FIG. 11D is a diagram of effect according to this application;

FIG. 12 is a diagram of a structure of a data processing apparatus according to an embodiment of this application;

FIG. 13 is a diagram of a structure of an execution device according to an embodiment of this application;

FIG. 14 is a diagram of a structure of a training device according to an embodiment of this application; and

FIG. 15 is a diagram of a structure of a chip according to an embodiment of this application.

## DESCRIPTION OF EMBODIMENTS

The following describes embodiments of this application with reference to the accompanying drawings in embodiments of this application. Terms used in embodiments of this application are only used to explain specific embodiments of this application, but are not intended to limit this application.

The following describes embodiments of this application with reference to the accompanying drawings. A person of ordinary skill in the art may know that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in appropriate circumstances, and this is merely a discrimination manner for describing objects having a same attribute in embodiments of this application. In addition, the terms "include", "have", and any other variant thereof are intended to cover a non-exclusive inclusion, so that a process, method, system, product, or device that includes a series of units is not necessarily limited to those units, but may include other units that are not expressly listed or that are inherent to such a process, method, system, product, or device.

The terms "substantially (substantially)", "about (about)", and the like are used herein as approximation terms rather than as degree terms, and are intended to take into account inherent deviations of measured values or calculated values that are known to a person of ordinary skill in the art. In addition, when embodiments of this application are described, "may (may)" is used to mean "one or more possible embodiments". The terms "use (use)", "using (using)", and "used (used)" used herein may be considered to be synonymous with the terms "utilize (utilize)", "utilizing (utilizing)", and "utilized (utilized)", respectively. In addition, the term "example (exemplary)" is intended to refer to an example or an illustration.

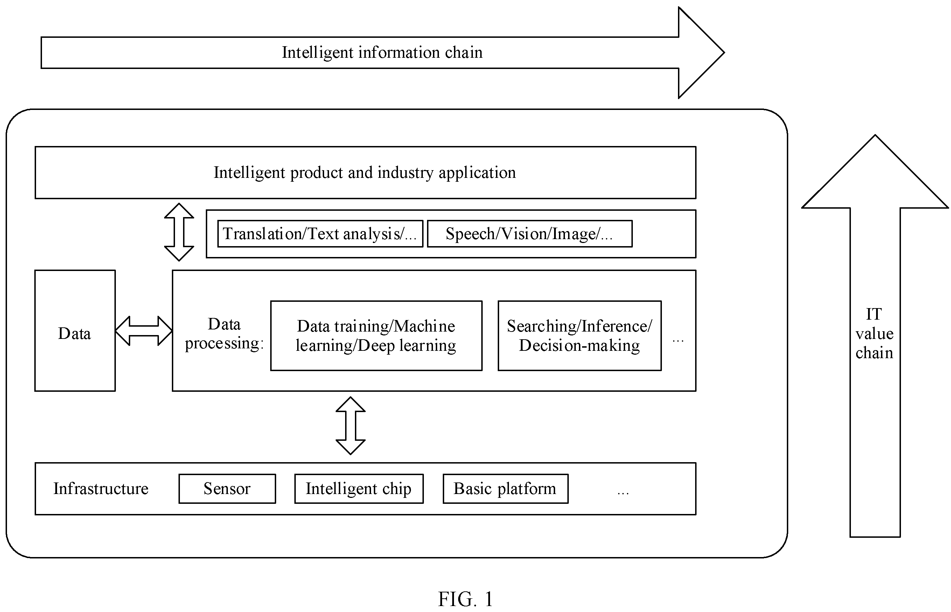

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain", spanning from an underlying infrastructure and information (technical implementation of provision and processing) of artificial intelligence to an industrial ecological process of a system, reflects a value brought by artificial intelligence to the information technology industry.

(1) Infrastructure

The infrastructure provides computing capability support for the artificial intelligence system, implements communication with the outside world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms, for example, a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. Typical functions are searching and matching.

Decision-making is a process of making a decision after intelligent information is inferred, and usually provides functions such as classification, sorting, and prediction.

(4) General capability

After the data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Intelligent product and industry application

The intelligent product and the industry application are a product and an application of the artificial intelligence system in various fields, and involve packaging of overall artificial intelligence solutions, to productize and apply intelligent information decision-making. Application fields of the intelligent information decision-making mainly include intelligent terminals, intelligent transportation, intelligent health care, autonomous driving, smart cities, and the like.

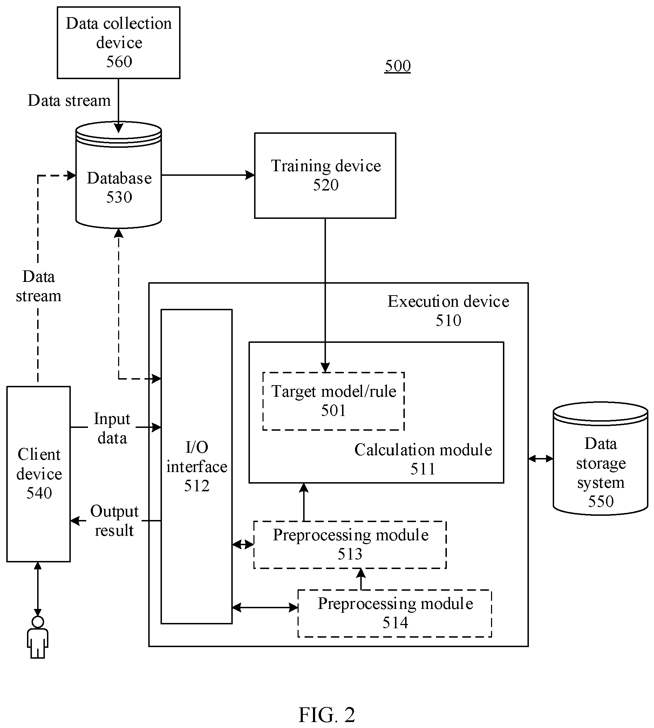

It should be understood that steps related to a model inference process in embodiments of this application relate to an AI-related operation. When the AI operation is performed, an instruction execution architecture of a terminal device and a server is not limited to the architecture in which the processor and the memory are combined. The following describes in detail a system architecture in an embodiment of this application with reference to FIG. 2.

FIG. 2 is a diagram of a system architecture according to an embodiment of this application. As shown in FIG. 2, the system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The execution device 510 may be a terminal device or a server that runs an image processing application.

The data collection device 560 is configured to collect a training sample. The training sample may be data collected by an image sensor (which may also be referred to as a response value of the image sensor), corresponding spectral information (which may also be referred to as a plurality of response values in a narrowband spectral response space), or the like. After collecting the training sample, the data collection device 560 stores the training sample in the database 530.

The training device 520 may pre-train a to-be-trained neural network (for example, a neural network model (for example, including an encoder and a decoder) in an embodiment of this application) based on the training sample maintained in the database 530, to obtain the target model/rule 501.

It should be understood that the training device 520 may perform a pre-training process on the to-be-trained neural network based on the training sample maintained in the database 530, or perform fine tuning on a model based on pre-training.

It should be noted that in an actual application, the training sample maintained in the database 530 is not necessarily collected by the data collection device 560, and may be received from another device. In addition, it should be noted that the training device 520 does not necessarily completely train the target model/rule 501 based on the training sample maintained in the database 530, and may perform model training by obtaining a training sample from a cloud or another position. The foregoing descriptions should not be construed as a limitation on this embodiment of this application.

The target model/rule 501 obtained through training by the training device 520 may be applied to different systems or devices, for example, applied to the execution device 510 shown in FIG. 2. The execution device 510 may be a terminal, such as a mobile phone terminal, a tablet computer, a notebook computer, an augmented reality (augmented reality, AR) or virtual reality (virtual reality, VR) device, or an in-vehicle terminal, or may be a server, or the like.

Specifically, the training device 520 may transfer a trained model to the execution device 510.

In FIG. 2, the input/output (input/output, I/O) interface 512 is configured for the execution device 510, and is configured to exchange data with an external device. A user may input data to the I/O interface 512 through the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

When the execution device 510 preprocesses the input data, or when the calculation module 511 of the execution device 510 performs a related processing procedure such as calculation, the execution device 510 may invoke data, code, or the like in the data storage system 550 for corresponding processing, or may store data, instructions, and the like obtained through corresponding processing in the data storage system 550.

Finally, the I/O interface 512 provides a processing result to the client device 540, to provide the processing result to the user.

In a case shown in FIG. 2, the user may manually specify the input data, and "manually specifying the input data" may be performed on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. Specifically, the result may be presented in a specific manner, for example, display, sound, or an action. The client device 540 may also be used as a data collection terminal, collect the input data input to the I/O interface 512 and the output result output from the I/O interface 512 as shown in the figure, use the input data and the output result as new sample data, and store the new sample data in the database 530. Certainly, the client device 540 may alternatively not perform collection. Instead, the I/O interface 512 directly stores, as new sample data in the database 530, the input data input to the I/O interface 512 and the output result output from the I/O interface 512 as shown in the figure.

It should be noted that FIG. 2 is merely a diagram of the system architecture according to this embodiment of this application. A position relationship between devices, components, modules, and the like shown in the figure does not constitute any limitation. For example, in FIG. 2, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows:
In embodiments of this application, the calculation module 511 of the execution device 510 may obtain the code stored in the data storage system 550, to implement steps related to a model inference process in embodiments of this application.

In this embodiment of this application, the calculation module 511 of the execution device 510 may include hardware circuits (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination thereof. For example, the training device 520 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

Specifically, the calculation module 511 of the execution device 510 may be a hardware system having an instruction execution function. The steps related to the model inference process provided in embodiments of this application may be software code stored in a memory. The calculation module 511 of the execution device 510 may obtain the software code from the memory, and execute the obtained software code to implement the steps related to the model inference process provided in embodiments of this application.

It should be understood that the calculation module 511 of the execution device 510 may be a combination of a hardware system having no instruction execution function and a hardware system having an instruction execution function. Some of the steps related to the model inference process provided in embodiments of this application may be implemented by the hardware system having no instruction execution function in the calculation module 511 of the execution device 510. This is not limited herein.

Details from a perspective of model training are as follows:
In embodiments of this application, the training device 520 may obtain code stored in a memory (which is not shown in FIG. 2, and may be integrated into the training device 520 or deployed separately from the training device 520), to implement steps related to model training in embodiments of this application.

In this embodiment of this application, the training device 520 may include hardware circuits (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination thereof. For example, the training device 520 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

It should be understood that the training device 520 may be a combination of a hardware system having no instruction execution function and a hardware system having an instruction execution function. Some of the steps related to model training provided in embodiments of this application may be implemented by the hardware system having no instruction execution function in the training device 520. This is not limited herein.

Embodiments of this application relate to massive applications of a neural network. Therefore, for ease of understanding, the following first describes related terms and related concepts such as the neural network in embodiments of this application.

(1) Neural network

The neural network may include a neuron. The neuron may be an operation unit that uses xs (that is, input data) and an intercept of 1 as an input. An output of the operation unit may be as follows:

$$h_{W,b}\left(x\right) = f\left(W^{T}x\right) = f(\sum\nolimits_{s=1}^{n} W_{s}x_{s} + b),$$

where

s=1, 2, ..., n, n is a natural number greater than 1, Ws is a weight of xs, and b is a bias of the neuron; and f is an activation function (activation function) of the neuron, and is used to introduce a nonlinear feature into the neural network, to convert an input signal in the neuron into an output signal. The output signal of the activation function may be used as an input of a next convolutional layer, and the activation function may be a sigmoid function. The neural network is a network formed by connecting a plurality of individual neurons together, that is, an output of one neuron may be an input of another neuron. An input of each neuron may be connected to a local receptive field of a previous layer to extract a feature of the local receptive field. The local receptive field may be a region including several neurons.

(2) A convolutional neural network (convolutional neuron network, CNN) is a deep neural network with a convolutional structure. The convolutional neural network includes a feature extractor that includes a convolutional layer and a subsampling layer. The feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature maps, and each feature map may include some neurons that are in a rectangular arrangement. Neurons on a same feature map share a weight, and the weight shared herein is a convolution kernel. Weight sharing may be understood as making feature extraction independent of a position. The convolution kernel may be initialized in a form of a matrix of a random size. In a process of training the convolutional neural network, an appropriate weight may be obtained for the convolution kernel through learning. In addition, benefits directly brought by the weight sharing are that connections between layers of the convolutional neural network are reduced, while an overfitting risk is reduced.

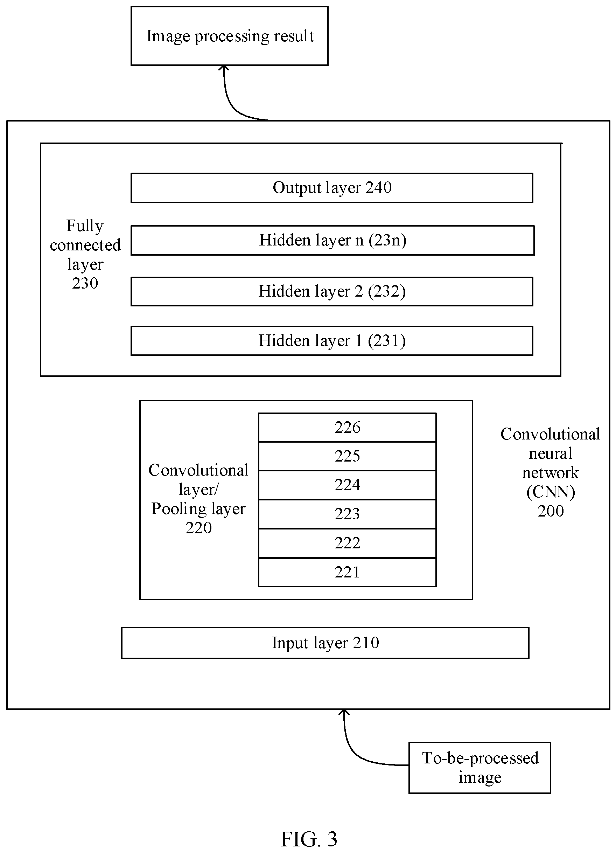

Because the CNN is a very common neural network, the following primarily describes a structure of the CNN in detail with reference to FIG. 3. As described in the foregoing basic concepts, the convolutional neural network is a deep neural network with a convolutional structure and is a deep learning (deep learning) architecture. The deep learning architecture means that multi-level learning is performed at different abstraction levels by using a machine learning algorithm. As a deep learning architecture, the CNN is a feed-forward (feed-forward) artificial neural network, and each neuron in the feed-forward artificial neural network may respond to an image input to the feed-forward artificial neural network.

As shown in FIG. 3, a convolutional neural network (CNN) 200 may include an input layer 210, a convolutional layer or pooling layer 220 (the pooling layer is optional), and a fully connected layer (fully connected layer) 230.

Convolutional layer or pooling layer 220:

Convolutional layer:

As shown in FIG. 3, the convolutional layer or pooling layer 220 may include, for example, layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. In other words, an output of a convolutional layer may be used as an input of a subsequent pooling layer, or may be used as an input of another convolutional layer to continue a convolution operation.

The following uses the convolutional layer 221 as an example to describe an internal operating principle of the convolutional layer.

The convolutional layer 221 may include a plurality of convolution operators. A convolution operator is also referred to as a kernel. In image processing, the convolution operator functions as a filter that extracts specific information from an input image matrix. The convolution operator may be essentially a weight matrix, and the weight matrix is usually predefined. In a process of performing a convolution operation on an image, the weight matrix usually processes pixels at a granularity of one pixel (or two pixels, or the like depending on a value of a stride (stride)) in a horizontal direction on the input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated by performing convolution with a single weight matrix. However, in most cases, a plurality of weight matrices with a same size (rows×columns), that is, a plurality of same-type matrices, rather than the single weight matrix are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. Sizes of the plurality of weight matrices (rows×columns) are the same. Sizes of feature maps extracted from the plurality of weight matrices with the same size are also the same, and then the plurality of extracted feature maps with the same size are combined to form an output of the convolution operation.

Weight values in the weight matrices need to be obtained through massive training in an actual application. Each weight matrix formed by the weight values obtained through training may be used to extract information from the input image, so that the convolutional neural network 200 performs correct prediction.

When the convolutional neural network 200 includes a plurality of convolutional layers, a larger quantity of general features are usually extracted at an initial convolutional layer (for example, the convolutional layer 221). The general features may be also referred to as low-level features. As a depth of the convolutional neural network 200 increases, a feature such as a high-level semantic feature extracted at a more subsequent convolutional layer (for example, the convolutional layer 226) is more complex. A feature with higher semantics is more applicable to a to-be-resolved problem.

Pooling layer:

Because a quantity of training parameters usually needs to be reduced, a pooling layer usually needs to be periodically introduced after a convolutional layer. To be specific, for the layers 221 to 226 in the layer 220 shown in FIG. 3, one convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a relatively small size. The average pooling operator may be used to calculate pixel values in the image within a specific range to generate an average value, and the average value is used as an average pooling result. The maximum pooling operator may be used to select a pixel with a maximum value within a specific range as a maximum pooling result. In addition, just as a size of a weight matrix in the convolutional layer should be related to a size of the image, an operator in the pooling layer should also be related to the size of the image. A size of a processed image output from the pooling layer may be less than a size of an image input into the pooling layer. Each pixel in the image output from the pooling layer represents an average value or a maximum value of a corresponding subregion of the image input into the pooling layer.

Fully connected layer 230:

After processing is performed at the convolutional layer or pooling layer 220, the convolutional neural network 200 still cannot output required output information. As described above, at the convolutional layer or pooling layer 220, only features are extracted, and parameters brought by the input image are reduced. However, to generate final output information (required class information or other related information), the convolutional neural network 200 needs to use the fully connected layer 230 to generate an output of one required class or outputs of a group of required classes. Therefore, the fully connected layer 230 may include a plurality of hidden layers (231, 232, ..., 23n shown in FIG. 3). Parameters included in the plurality of hidden layers may be obtained by performing pre-training based on related training data of a specific task type. For example, the task type may include image recognition, image classification, super-resolution image reconstruction, and the like.

The plurality of hidden layers in the fully connected layer 230 are followed by the output layer 240, that is, the last layer of the entire convolutional neural network 200. The output layer 240 has a loss function similar to classification cross-entropy, and the loss function is specifically used to calculate a prediction error. Once forward propagation of the entire convolutional neural network 200 (as shown in FIG. 3, propagation from the layer 210 to the layer 240 is forward propagation) is completed, back propagation (as shown in FIG. 3, propagation from the layer 240 to the layer 210 is back propagation) is started to update weight values and deviations of the layers mentioned above, to reduce a loss of the convolutional neural network 200 and an error between a result output by the convolutional neural network 200 by using the output layer and an ideal result.

It should be noted that the convolutional neural network 200 shown in FIG. 3 is merely an example of a convolutional neural network. In a specific application, the convolutional neural network may alternatively exist in a form of another network model, for example, include only a part of the network structure shown in FIG. 3. For example, the convolutional neural network used in this embodiment of this application may include only the input layer 210, the convolutional layer or pooling layer 220, and the output layer 240.

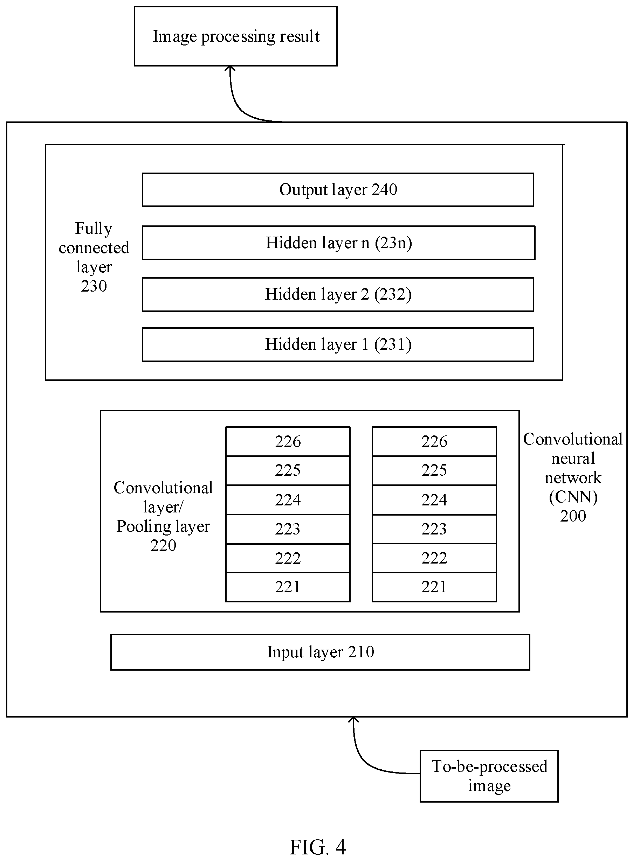

It should be noted that the convolutional neural network 100 shown in FIG. 3 is used only as an example of a convolutional neural network. In a specific application, the convolutional neural network may alternatively exist in a form of another network model. For example, as shown in FIG. 4, there are a plurality of parallel convolutional layers or pooling layers, and extracted features are all input to the fully connected layer 230 for processing.

(3) Deep neural network

The deep neural network (Deep Neural Network, DNN), also referred to as a multilayer neural network, may be understood as a neural network having many hidden layers. There is no specific metric for "many" herein. The DNN is divided based on positions of different layers, and a neural network in the DNN may be divided into three types of layers: an input layer, a hidden layer, and an output layer. Generally, a first layer is the input layer, a last layer is the output layer, and all intermediate layers are hidden layers. Layers are fully connected to each other, that is, any neuron at an $i^{th}$ layer is necessarily connected to any neuron at an $(i+1)^{th}$ layer. Although the DNN seems complex, work of each layer is not complex. Simply, an expression of a linear relationship is as follows: $\vec{y} = \alpha(W\vec{x} + b)$, where $\vec{x}$ is an input vector, $\vec{y}$ is an output vector, b is an offset vector, W is a weight matrix (also referred to as a coefficient), and $\alpha()$ is an activation function. At each layer, such a simple operation is performed merely on the input vector $\vec{x}$ to obtain the output vector $\vec{y}$. Because there are a large quantity of layers in the DNN, there are also a large quantity of coefficients W and offset vectors $\vec{b}$. These parameters are defined in the DNN as follows: The coefficient W is used as an example. It is assumed that in a three-layer DNN, a linear coefficient from a fourth neuron at a second layer to a second neuron at a third layer is defined as $W_{24}^3$. A superscript 3 represents a number of a layer at which the coefficient W is located, and a subscript corresponds to an output third-layer index 2 and an input second-layer index 4.

In summary, a coefficient from a $k^{th}$ neuron at an $(L-1)^{th}$ layer to a $j^{th}$ neuron at an $L^{th}$ layer is defined as $W_{jk}^L$.

It should be noted that there is no W parameter at the input layer. In the deep neural network, more hidden layers enable the network to characterize a complex situation of the real world better. Theoretically, a model with more parameters has higher complexity and a larger "capacity", which means that the model can complete a more complex learning task. Training the deep neural network is a process of learning a weight matrix, and a final objective of the training is to obtain a weight matrix of all layers of the trained deep neural network (a weight matrix formed by vectors W at many layers).

(4) Loss function

In a process of training the deep neural network, because it is expected that an output of the deep neural network is as close as possible to a predicted value that is really desired, a predicted value of the current network may be compared with a really desired target value, and then a weight vector of each layer of the neural network is updated based on a difference between the predicted value and the really desired target value (certainly, there is usually an initialization process before a first update, that is, parameters are preconfigured for each layer in the deep neural network). For example, if the predicted value of the network is large, the weight vector is adjusted to reduce the predicted value, and the adjustment is continued until the deep neural network can predict the really desired target value or a value very close to the really desired target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a larger difference. Therefore, training of the deep neural network is a process of minimizing the loss.

(5) Back propagation algorithm

The convolutional neural network may correct a value of a parameter in an initial super-resolution model in a training process by using an error back propagation (back propagation, BP) algorithm, so that a reconstruction error loss of the super-resolution model becomes smaller. Specifically, an input signal is transferred forward until an error loss occurs at an output, and the parameter in the initial super-resolution model is updated based on back propagation error loss information, so that the error loss converges. The back propagation algorithm is an error-loss-centered back propagation motion intended to obtain optimal parameters of the super-resolution model, such as the weight matrix.

(6) Multispectral (multispectral) is a spectral detection technology that can obtain a plurality of optical spectral bands (usually more than three) simultaneously and extend from visible light toward both infrared and ultraviolet.

(7) Spectral response aliasing (aliasing) refers to an overlapping region of wavelength ranges covered by spectral response channels. This weakens orthogonality between raw spectral signals and increases difficulty of signal reconstruction.

(8) An attention (attention) mechanism is a technology for imitating cognitive attention in an artificial neural network. This mechanism can enhance weights of some parts of input data of the neural network and reduce weights of other parts, so that the network focuses on a most important part of the data.

(9) A feature token (token) is a representation in the attention mechanism and indicates a part of independent feature information. For example, feature embedding of each word in a sentence may be considered as a token, and feature information of different channels in a color image may also be considered as a token.

(10) Feature similarity (similarity) and particularity (particularity): For a group of feature tokens, the similarity describes a distance between two features. The shorter the distance, the more similar the features. The particularity describes a degree of independence of each token. If two tokens are very similar, particularity of the tokens is weak.

(11) An image signal processor (image signal processor, ISP) is configured to process an image signal output by an image signal sensor. The image signal processor plays a dominant role in a camera system and is an important device that constitutes a camera. Main functions of the image signal processor include demosaicing, automatic exposure, automatic white balance, lens shading correction, gamma correction, color space conversion, dynamic range correction, image cropping, and the like.

(12) Spatial/Spectral resolution (Spatial/Spectral Resolution) of an image: An image is represented by using $H \times W \times C$, where $H \times W$ indicates a spatial resolution of the image, and C indicates a spectral resolution of the image. For example, a spectral resolution of a common 3-channel color image is 3, and a spectral resolution C of a multispectral image is generally greater than 3.

(13) Transformer layer

A neural network includes an embedding layer and at least one transformer layer. The at least one transformer layer may be N transformer layers (N is an integer greater than 0), and each transformer layer includes an attention layer, an addition and normalization (add & norm) layer, a feed-forward (feed forward) layer, and an addition and normalization (add & norm) layer that are adjacent in sequence. At the embedding layer, embedding processing is performed on a current input to obtain a plurality of embedding vectors. At the attention layer, P input vectors are obtained from a previous layer of a first transformer layer. Any first input vector in the P input vectors is used as a center. An intermediate vector corresponding to the first input vector is obtained based on a degree of correlation between the first input vector and each input vector within a preset attention window range. In this way, P intermediate vectors corresponding to the P input vectors are determined. At the pooling layer, the P intermediate vectors are combined into Q output vectors. A plurality of output vectors obtained at a last transformer layer in the transformer layers are used as a feature representation of the current input.

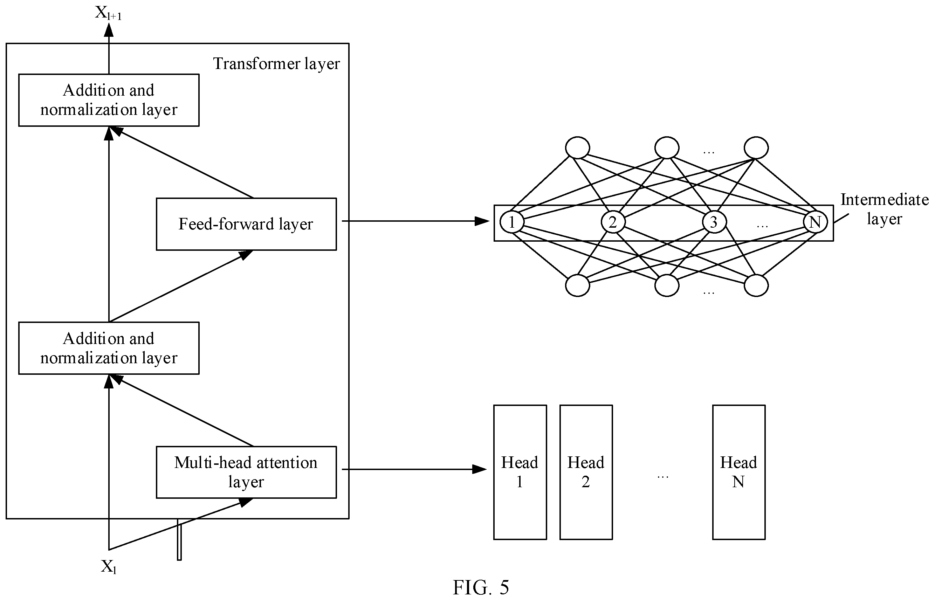

FIG. 5 is a diagram of a structure of a transformer layer. The transformer layer may include a multi-head attention layer (or an attention layer for short), an addition and normalization (add & norm) layer, a feed-forward (feed forward net, FFN) layer, and an addition and normalization (add & norm) layer that are adjacent in sequence.

The multi-head attention layer obtains N input vectors Xl from an upper layer of the multi-head attention layer. The N input vectors Xl may also be represented as a matrix X. The multi-head attention layer uses a self-attention mechanism to transform each vector based on a degree of correlation between vectors, to obtain N output vectors. The N output vectors may also be represented as a matrix Y. It may be understood that when the multi-head attention layer is a layer directly connected to the embedding layer, for example, the transformer layer directly connected to the embedding layer in FIG. 5, the input vector obtained by the multi-head attention layer is an embedding vector that is output by the embedding layer. When the multi-head attention layer is a multi-head attention layer included in a subsequent transformer layer, for example, a multi-head attention layer included in a transformer layer directly connected to a previous transformer layer in FIG. 5, the input vector obtained by the multi-head attention layer is a vector that is output by the previous transformer layer. The multi-head attention layer may include a plurality of attention heads (heads).

(14) Attention mechanism (attention mechanism)

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is an improvement over the attention mechanism. The self-attention mechanism reduces dependence on external information and better captures internal correlation of data or features. An essential idea of the attention mechanism may be rewritten as the following formula:

$$attention(query, source) = \sum_{i=1}^{Lx} similarity(query, key_i) * value_i.$$

In the formula, Lx=‖Source‖ represents a length of a source. The formula means that constituent elements in the source are assumed to include a series of data pairs. In this case, an element query in a target (Target) is provided, a similarity or correlation between the query and each key is calculated to obtain a weight coefficient of a value corresponding to each key, and then weighted summation is performed on values to obtain a final attention value. Therefore, in essence, the attention mechanism is to perform weighted summation on values of the elements in the source, and a query and a key are used to calculate a weight coefficient of a corresponding value. Conceptually, attention may be understood as selecting a small amount of important information from a large amount of information, focusing on the important information, and ignoring most of unimportant information. A process of focusing is reflected in calculation of the weight coefficient. A greater weight indicates that a value corresponding to the weight is more focused, that is, the weight indicates importance of information, and the value is the information corresponding to the weight. The self-attention mechanism may be understood as an intra attention (intra attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target=Source. A specific calculation process of the self-attention mechanism is the same except that a calculation object changes.

Currently, widely used cameras and smartphones are equipped with image sensors. A common image sensor uses a color filter array (Color Filter Array), also known as a Bayer filter (Bayer Filter), arranged above a photosensitive area. A common arrangement mode of the CFA is that a cyclic unit is formed by four pixels in a $2 \times 2$ pattern. This unit contains three primary colors: red (R), green (G), and blue (B). Therefore, a color image sensor is also referred to as an RGB image sensor.

The RGB sensor is intended to directly simulate a response of three types of cone cells (L/M/S) in a human eye to a spectrum. The response is sampling of complete spectral information, and the spectral information cannot be completely captured, which is likely to cause a metamerism (Metamerism) problem. As a result, color reproduction performance of an existing RGB camera is limited in some difficult scenes, for example, a scene including a large pure-color area. Compared with an RGB color sensor, a multispectral sensor is intended to capture a raw spectral signal more completely. Above a gray photosensitive area of the multispectral sensor, a cyclic unit is formed by 16 pixels in a $4 \times 4$ pattern, and each pixel corresponds to a color filter (or color filter coating). With this design, a spectral resolution of the sensor is increased from 3 dimensions to 16 dimensions, and a spectral signal can be captured more completely.

However, due to constraints of a filter material, a manufacturing process, and costs, a raw signal (RAW signal) collected by the image sensor is subject to aliasing between spectral bands. Therefore, the raw signal needs to be parsed and reconstructed to obtain spectral information. In an existing implementation, reconstruction accuracy of the spectral information is relatively poor.

To resolve the foregoing problem, embodiments of this application provide a data processing method. The following describes in detail a data processing method in embodiments of this application with reference to the accompanying drawings.

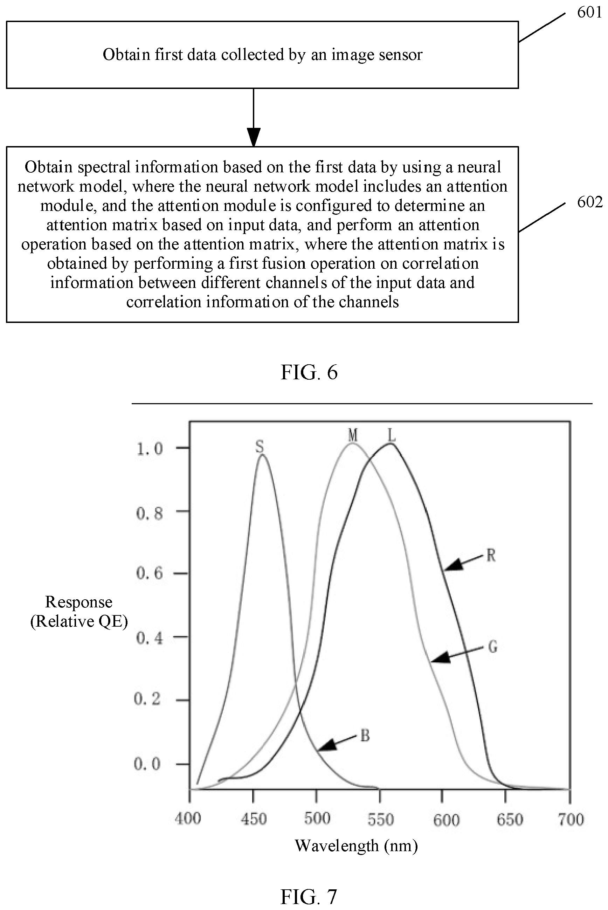

FIG. 6 is a schematic flowchart of a data processing method according to an embodiment of this application. As shown in FIG. 6, the data processing method provided in this embodiment of this application may include steps 601 and 602. The following separately describes the steps in detail.

601: Obtain first data collected by an image sensor.

The first data may be a response value of the image sensor.

For example, FIG. 7 is a diagram of a response value collected by an RGB sensor.

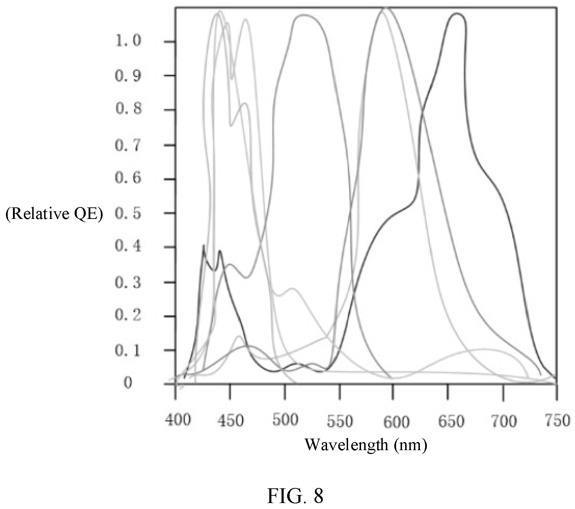

For example, FIG. 8 is a diagram of a multispectral sensor and a response value collected by the multispectral sensor.

Due to constraints of a filter material, a manufacturing process, and costs, a raw image (for example, the first data in this embodiment of this application) collected by the image sensor is usually subject to aliasing between spectral bands. Therefore, parsing and reconstruction need to be performed to obtain spectral information. This embodiment of this application is a process of parsing and reconstructing the first data to obtain the spectral information.

In a possible implementation, the spectral information includes a plurality of response values of a narrowband spectral response space. For example, the spectral information may include a response of each channel to a narrow band (for example, a resolution of 10 nm or 5 nm).

602: Obtain spectral information based on the first data by using a neural network model, where the neural network model includes an attention module, and the attention module is configured to determine an attention matrix based on input data, and perform an attention operation based on the attention matrix, where the attention matrix is obtained by performing a first fusion operation on correlation information between different channels of the input data and correlation information of the channels.

In a possible implementation, a network configured to parse and reconstruct spectral information may be the neural network model in this embodiment of this application. The model may include an embedding layer, an encoder, and a decoder (optionally, may further include a residual connection between modules).

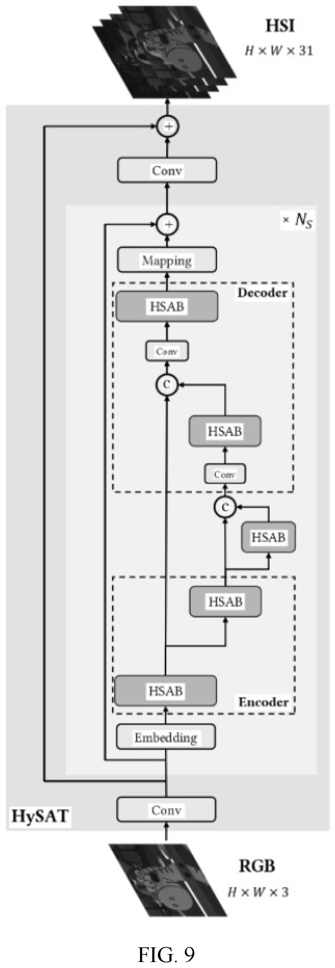

FIG. 9 is a diagram of a structure of a neural network model. An overall network structure is a multi-stage U-shaped structure. Thanks to upsampling and downsampling, the structure can reduce computational burden while capturing multi-scale spatial information. Feature embedding (embedding) and mapping (mapping): An RGB color image (or multispectral image MSI) is input, a convolution operation is performed to extract image features, spectral information is reconstructed based on residual learning, and finally, spectral features are remapped to a hyperspectral signal HSI for output.

In a possible implementation, the neural network model may include a module (that is, the attention module in this embodiment of this application) configured to perform an attention operation, and the module may belong to one or more of at least one attention head included in the neural network model.

For example, bodies of the encoder and the decoder in the neural network model may include hybrid spectral-wise attention blocks (hybrid spectral-wise attention blocks, HSABs) shown in FIG. 9, and a residual connection may be used between the encoder and the decoder to reduce an information loss.

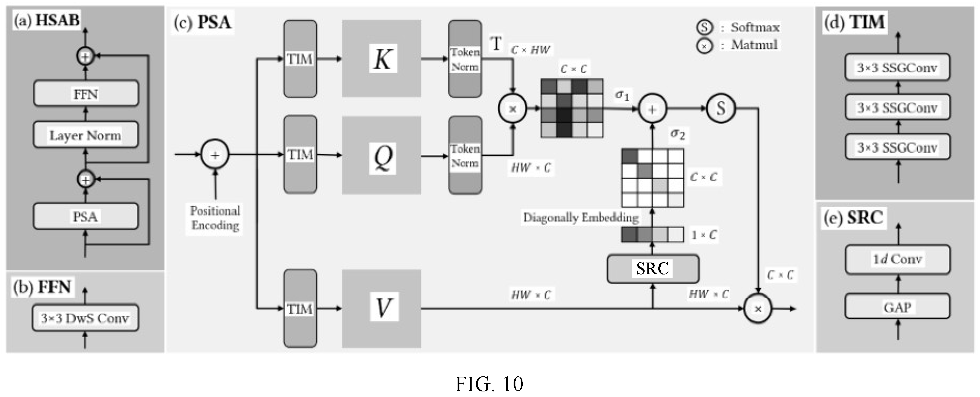

For example, with reference to FIG. 10, an HSAB may include layer normalization (Layer Norm), a plausible spectral-wise self-attention (Plausible Spectral-wise self-Attention, PSA) module, and a feed-forward network (Feed-Forward Network, FFN). The FFN is implemented by using $3\times3$ depthwise separable convolution. The PSA includes a spectral-wise re-calibration (Spectral-wise Re-Calibration, SRC) module and a feature token independent mapping (Token Independent Mapping, TIM) module.

The attention module may belong to the PSA (for example, a head in the PSA, where FIG. 10 is a diagram of a head in the PSA).

In a possible implementation, the attention module is specifically configured to: perform linear transformation (for example, perform linear transformation on the input data (optionally, the input data may be a fusion result of the input data and positional encoding) by using the TIM module shown in FIG. 10), to obtain a matrix K, a matrix Q, and a matrix V; and determine the attention matrix based on the matrix K, the matrix Q, and the matrix V.

In an existing implementation, each input vector Xi in N input vectors <X1, X2, ..., XN> is transformed by using a first transformation matrix Q, a second transformation matrix K, and a third transformation matrix V separately, to obtain a first intermediate vector (vector q), a second intermediate vector (vector k), and a third intermediate vector (vector v) corresponding to the input vectors. Operationally, linear transformation may be performed, by using the first transformation matrix Q, the second transformation matrix K, and the third transformation matrix V separately, on an input matrix X including N input vectors, to obtain a matrix Q, a matrix K, and a matrix V of the input matrix; and then the matrices are separately split to obtain the vector q, the vector k, and the vector v corresponding to the input vectors. For any $i^{th}$ input vector Xi in the N input vectors, a degree of correlation between the $i^{th}$ input vector Xi and each input vector Xj is determined based on a dot product operation between a first intermediate vector (vector q, qi) corresponding to the $i^{th}$ input vector and each second intermediate vector (vector k, kj) corresponding to each input vector Xj. Although a dot product result of qi and kj may also be directly determined as a degree of correlation, more classically, the dot product result is first divided by a constant, then a softmax operation is performed, and an operation result is used as a degree of correlation between the input vectors Xi and Xj. Degrees of correlation between all input vectors may form an attention matrix, that is:

$$\alpha_{i,j} = softmax\left(\frac{q_i \cdot k_j}{\sqrt{d_k}}\right).$$

Then each degree of correlation $\alpha_{i,j}$ between the $i^{th}$ input vector Xi and each input vector Xj may be used as a weighting factor to perform a weighted combination on a third intermediate vector (v vector, vj) corresponding to each input vector Xj (an action of the weighted combination is equivalent to an attention operation performed based on the attention matrix), to obtain an $i^{th}$ combined vector Ci corresponding to the $i^{th}$ input vector Xi:

$$C_i = \sum_{j=1}^{N} \alpha_{i,j} v_j.$$

Then a vector sequence <C1, C2, ..., CN> of N combined vectors or a matrix C corresponding to the N input vectors may be obtained. N output vectors may be obtained based on the sequence of the combined vectors. Specifically, in an embodiment, the vector sequence of the N combined vectors may be directly used as the N output vectors, that is, Yi=Ci. In this case, an output matrix Y is the combined vector matrix C, and may also be expressed as follows:

$$Y = softmax\left(\frac{QK^T}{\sqrt{d_k}}\right)V.$$

However, in the foregoing implementation, only a degree of correlation between the different channels is considered in a process of calculating the attention matrix. In some implementations, when values of elements in the attention matrix are close to each other (for example, all are small or all are large), there is no clear degree of distinction between the different channels. Consequently, an effect of the attention operation is relatively poor. Especially in a scenario of spectral information reconstruction, each channel may be considered to have a specific physical meaning. Therefore, the attention matrix needs to represent a degree of distinction between the different channels as much as possible, to improve reconstruction accuracy of the spectral information.

In this embodiment of this application, when obtaining the attention matrix through calculation, the attention module may fuse the degree of correlation between the different channels and a degree of correlation of the channels, so that the attention matrix can model the degree of distinction between the different channels.

In a possible implementation, the correlation information between the different channels may be determined based on the matrix K and the matrix Q. For example, refer to $\frac{QK^T}{\sqrt{d_k}}$ described in the foregoing embodiment.

In a possible implementation, the correlation information of the channels may be determined based on the matrix V.

In a possible implementation, the correlation information of the channels is determined in the following manner: performing a second fusion operation on data in each channel of the matrix V, to obtain dimension-reduced data; and performing convolution on the dimension-reduced data, and converting a convolution result into a diagonal matrix, where the diagonal matrix is used as the correlation information of the channels.

In a possible implementation, the second fusion operation is a global average pooling or convolution operation.

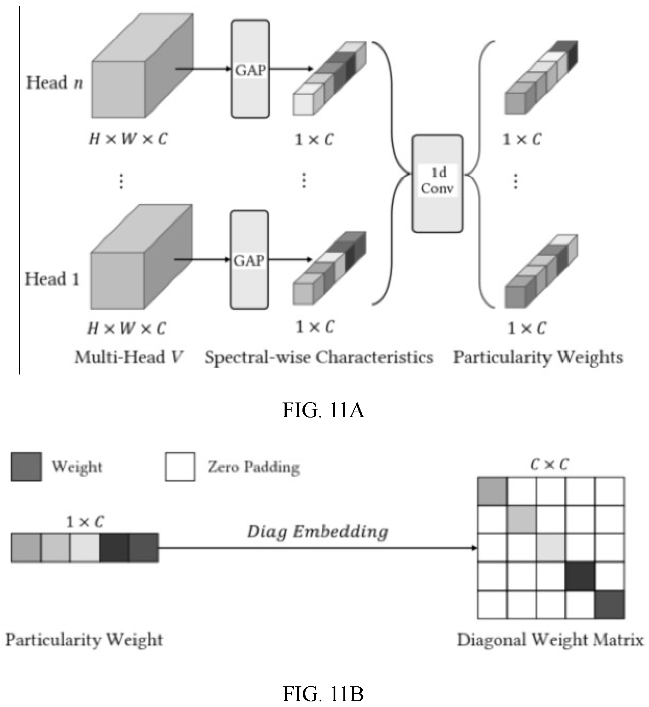

For example, with reference to FIG. 11A, another alternative operation such as global average pooling (global average pooling, GAP) or convolution may be used to reduce dimensions of a feature from $H \times W \times C$ to $1 \times C$, and extract a feature in a spectral dimension. Then a $1 \times C$ feature is mapped to a particularity attention weight vector $1 \times C$ by using one-dimensional convolution. Optionally, a weight of the one-dimensional convolution may be shared in each head branch.

As shown in FIG. 11B, the obtained particularity attention weight vector is diagonally embedded (Diagonally Embedding, DE) to obtain a $C \times C$ matrix. The diagonal matrix, used as the correlation information of the channels, is fused with the correlation information that is between the channels and that is obtained based on the matrix Q and the matrix K, to obtain the attention matrix.

In a possible implementation, the correlation information of the channels and the correlation information that is between the channels and that is obtained based on the matrix Q and the matrix K may be fused by using the first fusion operation.

In a possible implementation, the first fusion operation is matrix addition.

In a possible implementation, the first fusion operation is weighted summation, and a weight corresponding to the correlation information between the different channels and a weight corresponding to the correlation information of the channels are learnable parameters.

For example, the foregoing process may be represented by using the following formula:

$$\text{PSA(X)} = \text{Softmax}(\sigma_1 \frac{K^T Q}{\|K\| \cdot \|Q\|} + \sigma_2 \text{DE}(\text{SRC}(\text{V})))\text{V},$$

where

X represents an input feature, Q, K, and V respectively represent a query, a key, and a value in an attention mechanism and are respectively obtained by performing linear transformation on X, and $\sigma_1$ and $\sigma_2$ are learnable weighting parameters.

In addition, in this application, to further increase the degree of distinction between the different channels, in a process of calculating the matrix K, the matrix Q, and the matrix V, interactive fusion may be performed on the input data (or fusion of the input data and other data such as positional features) in the channels, to obtain values of the matrix K, the matrix Q, or the matrix V in the corresponding channels.

In a possible implementation, a convolution kernel may be used for a channel of the input data, to obtain a value of the matrix K, the matrix Q, or the matrix V in the corresponding channel. In other words, during calculation of the matrix K, the matrix Q, or the matrix V, at least one element in the matrix is obtained through calculation by using one convolution kernel in one channel of the input data, instead of being obtained through interaction between channels. This projection mode is independently applied to each channel of spectral features, and maintains particularity of a spectral information token.

For example, a convolution operation may be performed, based on the first convolution kernel, on data that is in a first channel and that is included in the input data, to obtain a first convolution result; and a convolution operation may be performed, based on a second convolution kernel, on the data that is in the first channel and that is included in the input data, to obtain a second convolution result, where the first convolution result and the second convolution result are used for concatenation to obtain one of the matrix K, the matrix Q, and the matrix V. For example, the foregoing step is used to calculate the matrix K, and the first convolution result and the second convolution result are used for concatenation to obtain the matrix K (certainly, a concatenated object may further include another convolution calculation result). For example, the foregoing step is used to calculate the matrix Q, and the first convolution result and the second convolution result are used for concatenation to obtain the matrix Q (certainly, a concatenated object may further include another convolution calculation result). For example, the foregoing step is used to calculate the matrix V, and the first convolution result and the second convolution result are used for concatenation to obtain the matrix V (certainly, a concatenated object may further include another convolution calculation result).

In a possible implementation, for the same matrix Q, the same matrix K, or the same matrix V, a same convolution kernel may be used to calculate values of at least two different channels. For example, a convolution operation may be performed, based on the first convolution kernel, on the data that is in the first channel and that is included in the input data, to obtain the first convolution result; and a convolution operation may be performed, based on the second convolution kernel, on the data that is in the first channel and that is included in the input data, to obtain the second convolution result, where the first convolution kernel is the same as the second convolution kernel.

The foregoing process of calculating the matrix K, the matrix Q, or the matrix V may be performed by the TIM module in the structure shown in FIG. 10.

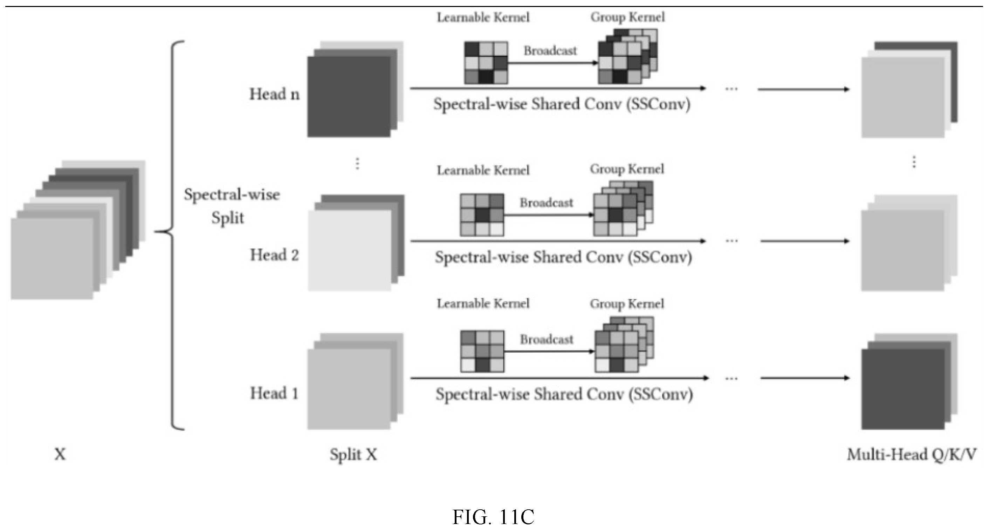

As shown in FIG. 11C, for a branch (Head) in a multi-head attention mechanism, a convolution kernel for implementing linear mapping may be learned, and then the convolution kernel obtained through learning is replicated and broadcast within the head, that is, the convolution kernel is shared, and applied to each channel of spectral features.

A processing procedure of the attention head (head) is described above. In an MHA architecture, an MHA layer maintains m sets of transformation matrices, and each set of transformation matrices includes the matrix Q, the matrix K, and the matrix V. Therefore, the foregoing operations may be performed in parallel, to obtain m combined vector sequences (that is, m matrices C). Each vector sequence includes N combined vectors obtained based on one set of transformation matrices. In this case, the MHA layer concatenates the obtained m combined vector sequences to obtain a concatenated matrix. Corresponding N output vectors <Y1, Y2, ..., YN> are obtained by splitting the output matrix Y. In the foregoing operation process, at the MHA layer, a transformation operation is performed based on the degree of correlation between the N input vectors, to obtain the N output vectors.

The following describes beneficial effects of this embodiment of this application with reference to experiments.

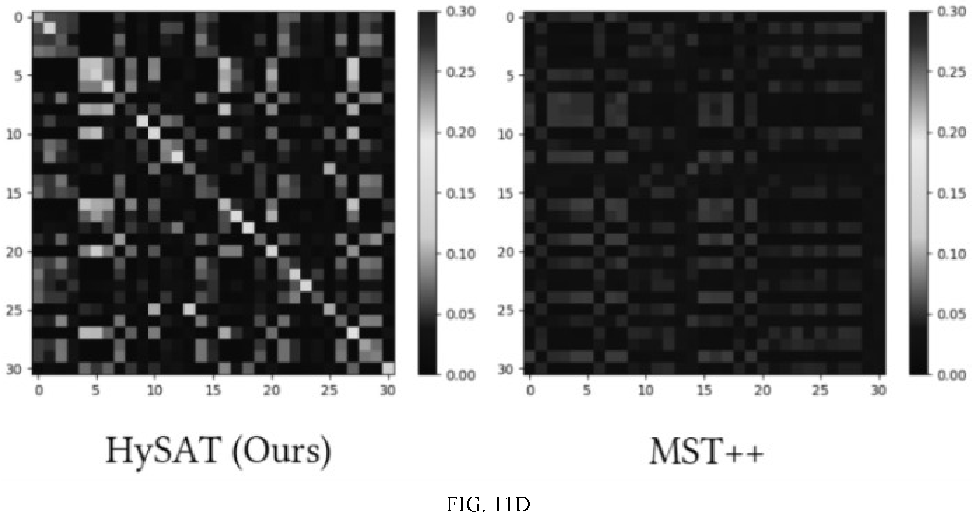

In this solution, global average pooling (GAP) and 1D convolution are performed to model spectral particularity (Particularity) to improve reconstruction performance of a spectral signal. As shown in FIG. 11D, it can be learned from a visualization result of a similarity of attention features that, compared with a representative algorithm (MST++) in the industry, this embodiment of this application significantly improves particularity of spectral features. As shown in Table 1, when an SRC structure is removed from the network model, both a mean relative absolute error (Mean Relative Absolute Error, MRAE) and a root mean square error (Root Mean Square Error, RMSE) increase significantly, which proves an effect of the SRC structure.

Table 1

| Method | MRAE↓ | RMSE↓ | Params↓ | FLOPs↓ |
|---|---|---|---|---|
| PSA w/o SRC | 0.0668 | 0.0172 | **0.47 M** | **7.43 G** |
| PSA | **0.0633** | **0.0157** | **0.47 M** | <u>7.44 G</u> |

As shown in Table 2, when a TIM structure is removed from the network model, both a mean relative absolute error (Mean Relative Absolute Error, MRAE) and a root mean square error (Root Mean Square Error, RMSE) increase significantly, which proves an effect of the TIM structure.

Table 2

| Method | MRAE↓ | RMSE↓ | Params↓ | FLOPs↓ |
|---|---|---|---|---|
| PSA w/o TIM | 0.0657 | 0.0167 | 0.55 M | 7.85 G |
| PSA | **0.0633** | **0.0157** | **0.47 M** | 7.44 G |

This solution has low complexity, and modules can be optimized together in an end-to-end manner. Both correlation and particularity of spectral features are modeled based on the proposed spectral-wise re-calibration and token independent mapping model structures. A leading effect of spectral signal reconstruction is achieved in a public data set. Compared with a series of existing algorithms and a champion solution MST++ of an NTIRE 2022 spectral reconstruction challenge, reconstruction errors are significantly reduced, as shown in Table 3.

Table 3

| Method | MRAE↓ | RMSE↓ | Params↓ | FLOPs↓ |
|---|---|---|---|---|
| HSCNN+[28] | 0.3814 | 0.0588 | 4.65 M | 304.45 G |
| HR Net[44] | 0.3476 | 0.0550 | 31.70 M | 163.81 G |
| AWAN[20] | 0.2191 | 0.0349 | 4.04 M | 270.61 G |
| Restormer[42] | 0.1833 | 0.0274 | 15.11 M | 93.77 G |
| DRCR Net[19] | 0.1823 | 0.0288 | 9.48 M | 586.61 G |
| MPR Net[43] | 0.1817 | 0.0270 | 3.62 M | 101.60 G |
| MST++[9] | 0.1645 | 0.0248 | 1.62 M | 22.29 G |
| **HySAT (Ours)** | **0.1599** | **0.0246** | **1.40 M** | **21.08 G** |

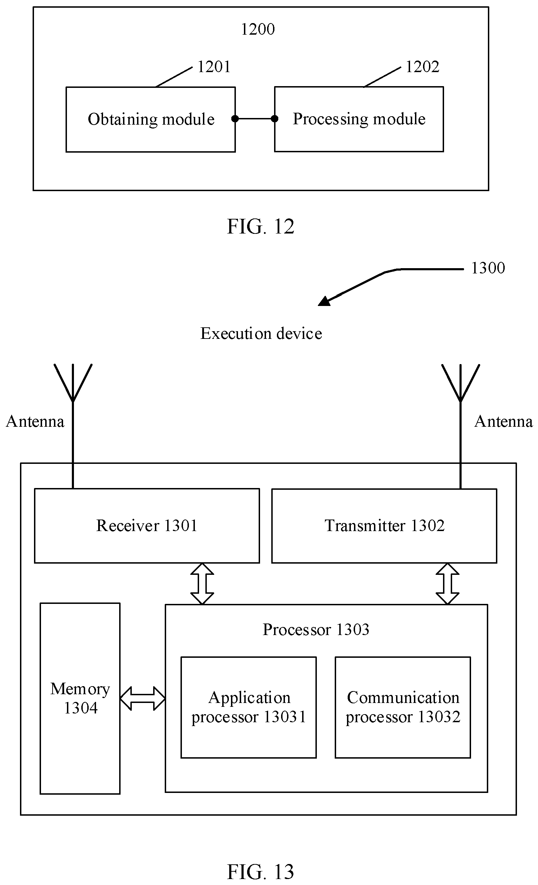

In addition, FIG. 12 is a diagram of a structure of a data processing apparatus 1200 according to an embodiment of this application. The data processing apparatus 1200 includes an obtaining module 1201 and a processing module 1202.

The obtaining module 1201 is configured to obtain first data collected by an image sensor.

For detailed descriptions of the obtaining module 1201, refer to descriptions of step 601 in the foregoing embodiment. Details are not described herein again.

The processing module 1202 is configured to obtain spectral information based on the first data by using a neural network model, where the neural network model includes an attention module, and the attention module is configured to determine an attention matrix based on input data, and perform an attention operation based on the attention matrix, where the attention matrix is obtained by performing a first fusion operation on correlation information between different channels of the input data and correlation information of the channels.

For detailed descriptions of the processing module 1202, refer to descriptions of step 602 in the foregoing embodiment. Details are not described herein again.

In a possible implementation, the attention module is specifically configured to perform linear transformation on the input data to obtain a matrix K, a matrix Q, and a matrix V, and determine the attention matrix based on the matrix K, the matrix Q, and the matrix V, where the correlation information of the channels is determined based on the matrix V, and the correlation information between the different channels is determined based on the matrix K and the matrix Q.

In a possible implementation, the correlation information of the channels is determined in the following manner:

performing a second fusion operation on data in each channel of the matrix V, to obtain dimension-reduced data; and performing convolution on the dimension-reduced data, and converting a convolution result into a diagonal matrix, where the diagonal matrix is used as the correlation information of the channels.

In a possible implementation, the first fusion operation is matrix addition.

In a possible implementation, the first fusion operation is weighted summation, and a weight corresponding to the correlation information between the different channels and a weight corresponding to the correlation information of the channels are learnable parameters.

In a possible implementation, the second fusion operation is a global average pooling or convolution operation.

In a possible implementation, the attention module belongs to at least one attention head (head) in the neural network model.

In a possible implementation, the processing module 1202 is specifically configured to:

perform, based on a first convolution kernel, a convolution operation on data that is in a first channel and that is included in the input data, to obtain a first convolution result; and

perform, based on a second convolution kernel, a convolution operation on the data that is in the first channel and that is included in the input data, to obtain a second convolution result, where

the first convolution result and the second convolution result are used for concatenation to obtain one of the matrix K, the matrix Q, and the matrix V.

In a possible implementation, the first convolution kernel is the same as the second convolution kernel.

In a possible implementation, the spectral information includes a plurality of response values of a narrowband spectral response space.

The following describes an execution device provided in embodiments of this application. FIG. 13 is a diagram of a structure of an execution device according to an embodiment of this application. The execution device 1300 may be specifically represented as a virtual reality VR device, a mobile phone, a tablet, a notebook computer, an intelligent wearable device, a monitoring data processing device, a server, or the like. This is not limited herein. Specifically, the execution device 1300 includes a receiver 1301, a transmitter 1302, a processor 1303, and a memory 1304 (the execution device 1300 may include one or more processors 1303, and one processor is used as an example in FIG. 13). The processor 1303 may include an application processor 13031 and a communication processor 13032. In some embodiments of this application, the receiver 1301, the transmitter 1302, the processor 1303, and the memory 1304 may be connected by using a bus or in another manner.

The memory 1304 may include a read-only memory and a random access memory, and provide instructions and data to the processor 1303. A part of the memory 1304 may further include a non-volatile random access memory (non-volatile random access memory, NVRAM). The memory 1304 stores a processor and operation instructions, an executable module or a data structure, a subset thereof, or an extended set thereof. The operation instructions may include various operation instructions used to implement various operations.

The processor 1303 controls an operation of the execution device. In a specific application, components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiment of this application may be applied to the processor 1303, or may be implemented by the processor 1303. The processor 1303 may be an integrated circuit chip and has a signal processing capability. During implementation, the steps of the foregoing method may be completed by using a hardware integrated logic circuit in the processor 1303 or instructions in a form of software. The processor 1303 may be a general-purpose processor, a digital signal processor (digital signal processing, DSP), a microprocessor, or a microcontroller, and may further include an application-specific integrated circuit (application specific integrated circuit, ASIC), a field programmable gate array (field-programmable gate array, FPGA) or another programmable logic device, a discrete gate or transistor logic device, or a discrete hardware component. The processor 1303 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1304. The processor 1303 reads information in the memory 1304, and completes steps related to a model inference process in the foregoing methods in combination with hardware of the processor 1303.

The receiver 1301 may be configured to receive input digit or character information, and generate a signal input related to a related setting and function control of the execution device. The transmitter 1302 may be configured to output digit or character information through a first interface. The transmitter 1302 may be further configured to send instructions to a disk group through the first interface, to modify data in the disk group. The transmitter 1302 may further include a display device such as a display.

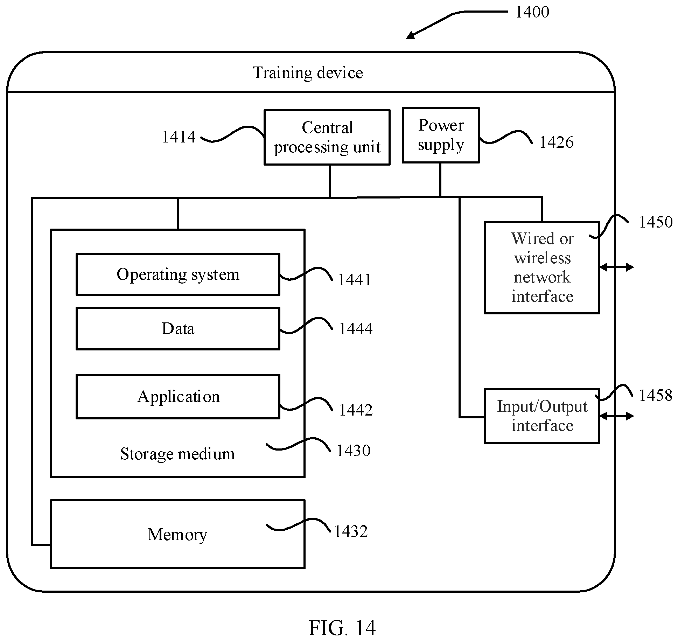

An embodiment of this application further provides a training device. FIG. 14 is a diagram of a structure of a training device according to an embodiment of this application. Specifically, the training device 1400 is implemented by one or more servers. The training device 1400 may vary greatly due to different configurations or performance, and may include one or more central processing units (central processing units, CPUs) 1414 (for example, one or more processors) and a memory 1432, and one or more storage media 1430 (for example, one or more mass storage devices) storing an application 1442 or data 1444. The memory 1432 and the storage medium 1430 may be transitory storage or persistent storage. A program stored in the storage medium 1430 may include one or more modules (not shown in the figure), and each module may include a series of instructions for performing operations on the training device. Further, the central processing unit 1414 may be configured to communicate with the storage medium 1430, and perform operations on the training device 1400 by using the series of instructions in the storage medium 1430.

The training device 1400 may further include one or more power supplies 1426, one or more wired or wireless network interfaces 1450, one or more input/output interfaces 1458, or one or more operating systems 1441, for example, Windows Server™, Mac OS X™, Unix™, Linux™, or FreeBSD™.

In this embodiment of this application, the central processing unit 1414 is configured to perform an action related to model training in the foregoing embodiment.

An embodiment of this application further provides a computer program product. When the computer program product is run on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal. When the program is run on a computer, the computer is enabled to perform steps performed by the foregoing execution device; or the computer is enabled to perform steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiment, or a chip in the training device performs the data processing method described in the foregoing embodiment. Optionally, the storage unit is an on-chip storage unit, for example, a register or a buffer. Alternatively, the storage unit may be an off-chip storage unit in a wireless access device, for example, a read-only memory (read-only memory, ROM) or another type of static storage device that can store static information and instructions, or a random access memory (random access memory, RAM).

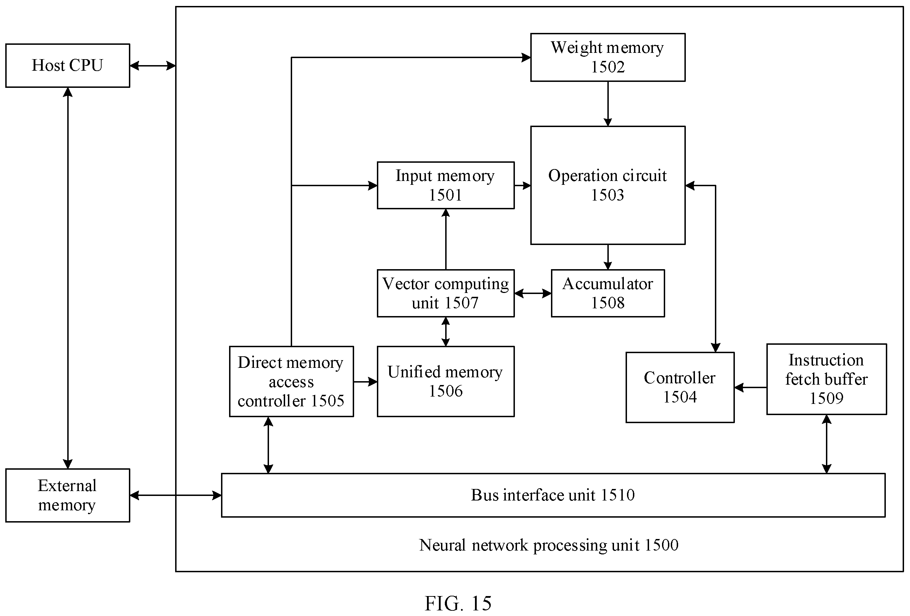

Specifically, FIG. 15 is a diagram of a structure of a chip according to an embodiment of this application. The chip may be represented as a neural network processing unit NPU 1500. The NPU 1500 is mounted to a host CPU (Host CPU) as a coprocessor, and the host CPU assigns a task. A core part of the NPU is an operation circuit 1503. A controller 1504 may control the operation circuit 1503 to extract matrix data in a memory and perform a multiplication operation.

In some implementations, the operation circuit 1503 internally includes a plurality of processing units (Process Engine, PE). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there are an input matrix A, a weight matrix B, and an output matrix C. The operation circuit fetches corresponding data of the matrix B from a weight memory 1502, and caches the data on each PE in the operation circuit. The operation circuit obtains data of the matrix A from an input memory 1501 to perform a matrix operation on the matrix B, and stores an obtained partial result or an obtained final result of the matrix in an accumulator (accumulator) 1508.

A unified memory 1506 is configured to store input data and output data. Weight data is directly transferred to the weight memory 1502 by using a direct memory access controller (Direct Memory Access Controller, DMAC) 1505. The input data is also transferred to the unified memory 1506 by using the DMAC.

A BIU, bus interface unit, that is, a bus interface unit 1510, is configured for interaction between an AXI bus and the DMAC and interaction between the AXI bus and an instruction fetch buffer (Instruction Fetch Buffer, IFB) 1509.

The bus interface unit 1510 (Bus Interface Unit, BIU for short) is configured for the instruction fetch buffer 1509 to obtain an instruction from an external memory, and further configured for the direct memory access controller 1505 to obtain raw data of the input matrix A or the weight matrix B from the external memory.

The DMAC is mainly configured to transfer input data in the external memory DDR to the unified memory 1506, transfer weight data to the weight memory 1502, or transfer input data to the input memory 1501.

A vector computing unit 1507 includes a plurality of operation processing units. When necessary, the vector computing unit 1507 performs further processing such as vector multiplication, vector addition, an exponential operation, a logarithmic operation, or value comparison on an output of the operation circuit 1503. The vector computing unit 1507 is mainly used for network computation at a non-convolutional or fully connected layer in a neural network, such as batch normalization (batch normalization), pixel-level summation, and upsampling of a feature map.

In some implementations, the vector computing unit 1507 can store a processed output vector in the unified memory 1506. For example, the vector computing unit 1507 may apply a linear function and/or a non-linear function to the output of the operation circuit 1503, for example, perform linear interpolation on a feature map extracted by a convolutional layer, or for another example, accumulate value vectors to generate an activation value. In some implementations, the vector computing unit 1507 generates a normalized value, a pixel-level sum value, or both. In some implementations, the processed output vector can be used as an activation input to the operation circuit 1503, for example, for use at a subsequent layer in the neural network.

The instruction fetch buffer (instruction fetch buffer) 1509 connected to the controller 1504 is configured to store an instruction used by the controller 1504.

All of the unified memory 1506, the input memory 1501, the weight memory 1502, and the instruction fetch buffer 1509 are on-chip memories. The external memory is private to a hardware architecture of the NPU.

Any one of the foregoing processors may be a general-purpose central processing unit, a microprocessor, an ASIC, or one or more integrated circuits for controlling program execution.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or may certainly be implemented by dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to implement a same function may be in various forms, for example, in a form of an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A data processing method, wherein the method comprises:

   obtaining first data collected by an image sensor; and
   obtaining spectral information based on the first data by using a neural network model, wherein
   the neural network model comprises an attention module, and the attention module is configured to determine an attention matrix based on input data, and perform an attention operation based on the attention matrix, wherein the attention matrix is obtained by performing a first fusion operation on correlation information between different channels of the input data and correlation information of the channels.

2. The method according to claim 1, wherein the attention module is specifically configured to perform linear transformation on the input data to obtain a matrix K, a matrix Q, and a matrix V, and determine the attention matrix based on the matrix K, the matrix Q, and the matrix V, wherein the correlation information of the channels is determined based on the matrix V, and the correlation information between the different channels is determined based on the matrix K and the matrix Q.

3. The method according to claim 1 or 2, wherein the correlation information of the channels is determined in the following manner:

performing a second fusion operation on data in each channel of the matrix V, to obtain dimension-reduced data; and
performing convolution on the dimension-reduced data, and converting a convolution result into a diagonal matrix, wherein the diagonal matrix is used as the correlation information of the channels.

4. The method according to any one of claims 1 to 3, wherein the first fusion operation is matrix addition.

5. The method according to any one of claims 1 to 4, wherein the first fusion operation is weighted summation, and a weight corresponding to the correlation information between the different channels and a weight corresponding to the correlation information of the channels are learnable parameters.

6. The method according to any one of claims 2 to 5, wherein the second fusion operation is a global average pooling or convolution operation.

7. The method according to any one of claims 1 to 6, wherein the attention module belongs to at least one attention head (head) in the neural network model.

8. The method according to any one of claims 2 to 7, wherein performing the linear transformation on the input data to obtain the matrix K, the matrix Q, and the matrix V comprises:

performing, based on a first convolution kernel, a convolution operation on data that is in a first channel and that is comprised in the input data, to obtain a first convolution result; and
performing, based on a second convolution kernel, a convolution operation on the data that is in the first channel and that is comprised in the input data, to obtain a second convolution result, wherein
the first convolution result and the second convolution result are used for concatenation to obtain one of the matrix K, the matrix Q, and the matrix V.

9. The method according to claim 8, wherein the first convolution kernel is the same as the second convolution kernel.

10. The method according to any one of claims 1 to 9, wherein the spectral information comprises a plurality of response values of a narrowband spectral response space.

11. A data processing apparatus, wherein the apparatus comprises:

an obtaining module, configured to obtain first data collected by an image sensor; and
a processing module, configured to obtain spectral information based on the first data by using a neural network model, wherein the neural network model comprises an attention module, and the attention module is configured to determine an attention matrix based on input data, and perform an attention operation based on the attention matrix, wherein the attention matrix is obtained by performing a first fusion operation on correlation information between different channels of the input data and correlation information of the channels.

12. The apparatus according to claim 11, wherein the attention module is specifically configured to perform linear transformation on the input data to obtain a matrix K, a matrix Q, and a matrix V, and determine the attention matrix based on the matrix K, the matrix Q, and the matrix V, wherein the correlation information of the channels is determined based on the matrix V, and the correlation information between the different channels is determined based on the matrix K and the matrix Q.

13. The apparatus according to claim 11 or 12, wherein the correlation information of the channels is determined in the following manner:

performing a second fusion operation on data in each channel of the matrix V, to obtain dimension-reduced data; and
performing convolution on the dimension-reduced data, and converting a convolution result into a diagonal matrix, wherein the diagonal matrix is used as the correlation information of the channels.

14. The apparatus according to any one of claims 11 to 13, wherein the first fusion operation is matrix addition.

15. The apparatus according to any one of claims 11 to 14, wherein the first fusion operation is weighted summation, and a weight corresponding to the correlation information between the different channels and a weight corresponding to the correlation information of the channels are learnable parameters.

16. The apparatus according to any one of claims 12 to 15, wherein the second fusion operation is a global average pooling or convolution operation.

17. The apparatus according to any one of claims 11 to 16, wherein the attention module belongs to at least one attention head (head) in the neural network model.

18. The apparatus according to any one of claims 12 to 17, wherein the processing module is specifically configured to:

perform, based on a first convolution kernel, a convolution operation on data that is in a first channel and that is comprised in the input data, to obtain a first convolution result; and
perform, based on a second convolution kernel, a convolution operation on the data that is in the first channel and that is comprised in the input data, to obtain a second convolution result, wherein
the first convolution result and the second convolution result are used for concatenation to obtain one of the matrix K, the matrix Q, and the matrix V.

19. The apparatus according to claim 18, wherein the first convolution kernel is the same as the second convolution kernel.

20. The apparatus according to any one of claims 11 to 19, wherein the spectral information comprises a plurality of response values of a narrowband spectral response space.

21. A computer storage medium, wherein the computer storage medium stores one or more instructions, and when the instructions are executed by one or more computers, the one or more computers are enabled to perform operations of the method according to any one of claims 1 to 10.

22. A computer program product, comprising computer-readable instructions, wherein when the computer-readable instructions are run on a computer device, the computer device is enabled to perform the method according to any one of claims 1 to 10.

23. A system, comprising at least one processor and at least one memory, wherein the processor and the memory are connected and communicate with each other through a communication bus;

the at least one memory is configured to store code; and
the at least one processor is configured to execute the code to perform the method according to any one of claims 1 to 10.

24. A chip, comprising a processor, wherein the processor is configured to support a data processing apparatus in implementing the method according to any one of claims 1 to 10.

Intelligent information chain ⟶

Intelligent product and industry application

| Translation/Text analysis/... | Speech/Vision/Image/... |

Data ⟷ Data processing:

| Data training/Machine learning/Deep learning | Searching/Inference/Decision-making | ... |

Infrastructure | Sensor | Intelligent chip | Basic platform | ...

IT value chain ⬆

FIG. 1

FIG. 2

Image processing result

Fully
connected
layer
230

Output layer 240

Hidden layer n (23n)

Hidden layer 2 (232)

Hidden layer 1 (231)

Convolutional
layer/
Pooling layer
220

226

225

224

223

222

221

Convolutional
neural
network
(CNN)
200

Input layer 210

To-be-processed
image

FIG. 3

FIG. 4

FIG. 5

EP 4 765 041 A1

601

Obtain first data collected by an image sensor

602

Obtain spectral information based on the first data by using a neural network model, where the neural network model includes an attention module, and the attention module is configured to determine an attention matrix based on input data, and perform an attention operation based on the attention matrix, where the attention matrix is obtained by performing a first fusion operation on correlation information between different channels of the input data and correlation information of the channels

FIG. 6

FIG. 7

FIG. 8

FIG. 9

(a) HSAB

FFN · Layer Norm · PSA

(b) FFN

3×3 DwS Conv

(c) PSA

Positional Encoding

TIM → K → Token Norm

TIM → Q → Token Norm

TIM → V

T $C \times HW$

$HW \times C$

$\sigma_1$ $C \times C$

$\sigma_2$ $C \times C$

$1 \times C$

Diagonally Embedding

SRC

$HW \times C$

$HW \times C$

$C \times C$

Ⓢ : Softmax
⊗ : Matmul

(d) TIM

3×3 SSGConv · 3×3 SSGConv · 3×3 SSGConv

(e) SRC

1d Conv ← GAP

FIG. 10

FIG. 11A

FIG. 11B

FIG. 11C

HySAT (Ours)          MST++

FIG. 11D

EP 4 765 041 A1

1200

1201

Obtaining module

1202

Processing module

FIG. 12

1300

Execution device

Antenna

Antenna

Receiver 1301

Transmitter 1302

Processor 1303

Memory
1304

Application
processor 13031

Communication
processor 13032

FIG. 13

1400

Training device

1414 — Central processing unit

Power supply — 1426

Operating system — 1441

Data — 1444

Application — 1442

Storage medium — 1430

Memory — 1432

Wired or wireless network interface — 1450

Input/Output interface — 1458

FIG. 14

FIG. 15

## INTERNATIONAL SEARCH REPORT

| International application No. |
| --- |
| **PCT/CN2024/116550** |

| A. | CLASSIFICATION OF SUBJECT MATTER |
| --- | --- |

G06V10/80(2022.01)i; G06V10/58(2022.01)i; G06V10/77(2022.01)i; G06T7/246(2017.01)i; G06V10/82(2022.01)i; G06N3/0464(2023.01)i

According to International Patent Classification (IPC) or to both national classification and IPC

| B. | FIELDS SEARCHED |
| --- | --- |

Minimum documentation searched (classification system followed by classification symbols)

IPC: G06V,G06N,G06T

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 光谱, 多光谱, 高光谱, 神经网络, 深度学习, 卷积, 注意力, 通道, transformer, matrix, spectral, convolution, attention, multispectral, hyper spectral, channel

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117392491 A (HUAWEI TECHNOLOGIES CO., LTD.) 12 January 2024 (2024-01-12) claims 1-24 | 1-24 |
| Y | CN 116029930 A (XIDIAN UNIVERSITY) 28 April 2023 (2023-04-28) description, paragraphs 0002-0102, and figures 4-6 | 1-2, 4-5, 7-12, 14-15, 17-24 |
| Y | CN 115661635 A (SHENZHEN UNIVERSITY) 31 January 2023 (2023-01-31) description, paragraphs 0042-0102, and figures 1-5 | 1-2, 4-5, 7-12, 14-15, 17-24 |
| A | CN 113655990 A (ZHONGKE CAMBRICON TECHNOLOGY CO., LTD.) 16 November 2021 (2021-11-16) entire document | 1-24 |
| A | CN 115700727 A (HUNAN UNIVERSITY) 07 February 2023 (2023-02-07) entire document | 1-24 |
| A | CN 116205789 A (MINJIANG UNIVERSITY) 02 June 2023 (2023-06-02) entire document | 1-24 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 November 2024** | **04 December 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/116550** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 116630461 A (NANJING UNIVERSITY OF SCIENCE AND TECHNOLOGY) 22 August 2023 (2023-08-22)<br>entire document | 1-24 |
| A | KR 20230053404 A (EL ROI LAB INC.) 21 April 2023 (2023-04-21)<br>entire document | 1-24 |

Form PCT/ISA/210 (second sheet) (July 2022)

**INTERNATIONAL SEARCH REPORT**
Information on patent family members

International application No.

**PCT/CN2024/116550**

| Patent document cited in search report | | | Publication date (day/month/year) | Patent family member(s) | | | Publication date (day/month/year) |
|---|---|---|---|---|---|---|---|
| CN | 117392491 | A | 12 January 2024 | None | | | |
| CN | 116029930 | A | 28 April 2023 | None | | | |
| CN | 115661635 | A | 31 January 2023 | None | | | |
| CN | 113655990 | A | 16 November 2021 | None | | | |
| CN | 115700727 | A | 07 February 2023 | None | | | |
| CN | 116205789 | A | 02 June 2023 | None | | | |
| CN | 116630461 | A | 22 August 2023 | None | | | |
| KR | 20230053404 | A | 21 April 2023 | KR | 102662997 | B1 | 03 May 2024 |
| | | | | KR | 20240025578 | A | 27 February 2024 |

Form PCT/ISA/210 (patent family annex) (July 2022)

**EP 4 765 041 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311138944